# EUROPÄISCHE PATENTANMELDUNG

(11) **EP 0 797 912 A2**
(43) Veröffentlichungstag der Anmeldung: **01.10.1997**
(21) Anmeldenummer: 97103911.0
(22) Anmeldetag: 08.03.1997
(51) Int. Cl.: A01D 67/00

(54) **Rotationsmähwerk**

(30) Priorität: 20.03.1996 DE 29604974 U
(71) Anmelder: H. Niemeyer Söhne GmbH & Co. KG, 48477 Hörstel-Riesenbeck (DE)
(72) Erfinder: Ungruh, Josef, 48429 Rheine (DE); Tebbenhoff, Hermann, 48496 Hopsten (DE)

(57) **Zusammenfassung**

Die Erfindung betrifft ein Rotationsmähwerk, das durch ein Verbindungsgestänge oder eine Deichsel (4) zu einem Verbindungsgestänge (3) mit einem Traktor (3) verbindbar ist, der bei der Arbeit die Mähwerkzeuge rotierend antreibt, die mit einem Rahmen (5) verbunden sind, der sich über Stützräder auf dem Boden abstützt, wobei zumindest eines der Stützräder (8,9) des Mähwerks antreibbar ist.

## Beschreibung

Die Erfindung betrifft einen Rotationsmähwerk gemäß dem Oberbegriff des Anspruchs 1.

Aus der DE 41 12 155 C1 ist ein Anhängemähwerk bekannt, das einem Abdriften am Hang selbsttätig entgegenwirkt. Dies soll dadurch erreicht werden, daß an jedem Laufrad vertikale Schwenkachsen hinter dem Aufstandspunkt des jeweiligen Laufrades angeordnet sind, daß jedes Laufrad gegenüber dem Mähwerksrahmen in einem durch Anschläge begrenzten Bereich um seine vertikale Achse schwenkbar gelagert und durch einen Kraftspeicher in eine mittlere Stellung rückführbar ist. In feuchten Verhältnissen, wie sie im Bereich der Grasnarbe auf Wiesen üblich sind, führt die Steuerung der Räder zu Schlupf, so daß das Gegensteuern vielfach nicht ausreicht, das Abdriften des Mähwerks zu verhindern.

Aufgabe der Erfindung ist es, ein seitlich vom Traktor arbeitendes Rotationsmähwerk zu schaffen, das ein seitliches Abdriften des Mähwerks bei der Arbeit in Hanglagen vermeidet und bei der Arbeit die Zugkraftbelastung auf den Traktor wesentlich verringert.

Die Erfindung löst die Aufgabe mit dem Merkmal des kennzeichnenden Teils des Anspruchs 1. Hinsichtlich weiterer wesentlicher Ausgestaltungen der Erfindung wird auf die Ansprüche 2 bis 13 verwiesen.

Die Erfindung verhindert das seitliche Abdritten des Rotationsmähwerks in Hanglagen in vorteilhafter Weise dadurch, daß zumindest eines der Stützräder des Mähwerks angetrieben ist. In extremen Verhältnissen kann es auch von Vorteil sein, wenn alle Stützräder des Mähwerks angetrieben sind.

Für den Antrieb sieht die Erfindung für jedes Stützrad vorzugsweise einen gesteuerten Hydromotor vor, der vom Traktor aus mit Drucköl versorgt wird. So ist es auf einfache Weise möglich, auch in Ungünstigen Geländebedingungen das Mähwerk parallel zum Traktor laufen zu lassen und die Zugkraftbelastung auf den Traktor wesentlich zu verringern, wodurch auch die Sicherherit bei Arbeiten in extremen Hanglagen erhöht wird.

Der Antrieb des oder der Stützräder erfolgt vorzugsweise fahrgeschwindigkeitsabhängig, wobei sich der Antrieb automatisch der Fahrgeschwindigkeit des Traktors anpaßt. Dies kann beispielsweise dadurch erfolgen, daß ein Leerrad mitläuft, das die Geschwindigkeit unabhängig vom Schlupf der Traktorräder usw. abtastet und über eine elektronische Steuerung die erforderliche Drehzahl des Antriebsrades vorgibt.

Der Antrieb selbst kann auf verschiedene Arten erfolgen, z. B. über einen Hydromotor, der dem angetriebenen Stützrad zugeordnet ist. Zur Steuerung wird dem Hydromotor ein regelbares Stromregelventil vorgeschaltet, dem ein Sicherheits-Rückschlagventil nachgeordnet ist. Dem Hydromotor parallelgeschaltet ist ein einstellbares Druckbegrenzungsventil (Folgeventil), das das vom Hydromotor nicht verarbeitete Drucköl dem Rücklauf zuführt.

Wenn die Steuerung des Hydromotors z.B. aus Kostengründen nicht exakt fahrgeschwindigkeitsabhängig sein soll, sieht die Erfindung vor, das Stromregelventil so einzustellen, daß die Ölmenge den gegebenen Verhältnissen und der maximalen Arbeitsgeschwindigkeit angepaßt ist. Der Antrieb wirkt dann unterstützend, was in den meisten Fällen zur Verhinderung des Abdriftens am Hang ausreichend ist. Ferner ist es beispielsweise möglich, die Steuerung des regelbaren Stromregelventils vom Traktor aus bedienbar vorzusehen, und zwar wahlweise für jedes angetriebene Stützrad gesondert, so daß sie unabhängig voneinander ist. Dies ist sinnvoll, da die angetriebenen Stützräder, z.B. in Wendekurven auf verschiedenen Kreisbahnen laufen oder ein zweites Antriebsrad nur in Extremlagen zugeschaltet wird.

Anstelle einer fahrgeschwindigkeitsabhängigen Steuerung der Antriebsräder sieht die Erfindung beispielsweise einen Regelkreis vor, der dem Mähwerk eine vorgegebene Lage und/oder Ausrichtung zum Traktor vermittelt. Hierzu bieten sich u.a. weg- oder druckabhängige Steuerungen zwischen Traktor/Deichsel und Deichsel/Mähwerksrahmen an.

Zwischen jedem Antriebsrad und dem Antriebsmotor ist jeweils ein Freilauf angeordnet, der u.a. bei Rückwärtsfahrt des Mähwerks wirksam wird.

Nach der Erfindung können verschiedene Antriebsarten für die Räder angewendet werden. Neben der bereits geschilderten kann auch auf bekannte Weise ein Hydromotor mit veränderlichem Verdrängungsvolumen verwendet werden, wenn die Steuerung der Antriebsräder drehmomentabhängig sein soll.

Zum Antrieb der Stützräder kann beispielsweise anstelle eines Hydromotors auch ein gesteuerter Elektromotor verwendet werden, wenn der Traktor die entsprechenden Voraussetzungen bietet. Ferner ist ein mechanischer Antrieb von der Traktorzapfwelle aus in Verbindung mit einem Regelgetriebe möglich.

Zum Straßentransport wird das Anhängemähwerk hydraulisch hinter die Traktorlängsachse geschwenkt und der Antrieb der Räder kann zu- oder abgeschaltet sein.

Die Vorteile der Erfindung lassen sich außer bei Anhängemähwerken bei allen Arten von seitlich neben dem Traktor arbeitenden Mähwerken sehr gut anwenden, zum Beispiel bei Anbaumähwerken größerer Arbeitsbreite, um die Arbeit in Hanglagen zu verbessern, die Belastung auf das Mähwerk und den Traktor zu verringern und das Mähwerksgewicht zu senken. Das trifft sowohl für Scheiben- als auch für Trommelmähwerke zu.

Weitere Merkmale und Vorteile der Erfindung ergeben sich aus der nachfolgenden Beschreibung und den Zeichnungen, in denen zwei Ausführungsbeispiele eines Rotationsmähwerkes nach der Erfindung schematisch, angenähert maßstäblich dargestellt sind.

Es zeigt:
- Fig. 1 -: Ein Rotationsmähwerk in Arbeitsstellung in einer Draufsicht mit zwei Antriebsrädern und einer angedeuteten Transportstellung des Mähwerks.
- Fig. 2 -: Ein Rotationsmähwerk gemäß Fig. 1, jedoch mit einem Antriebsrad.
- Fig. 3 -: Einzelheit A gemäß Fig. 1 oder Fig. 2 in vergrößertem Maßstab.
- Fig. 4 -: Hydraulikplan für ein Antriebsrad.

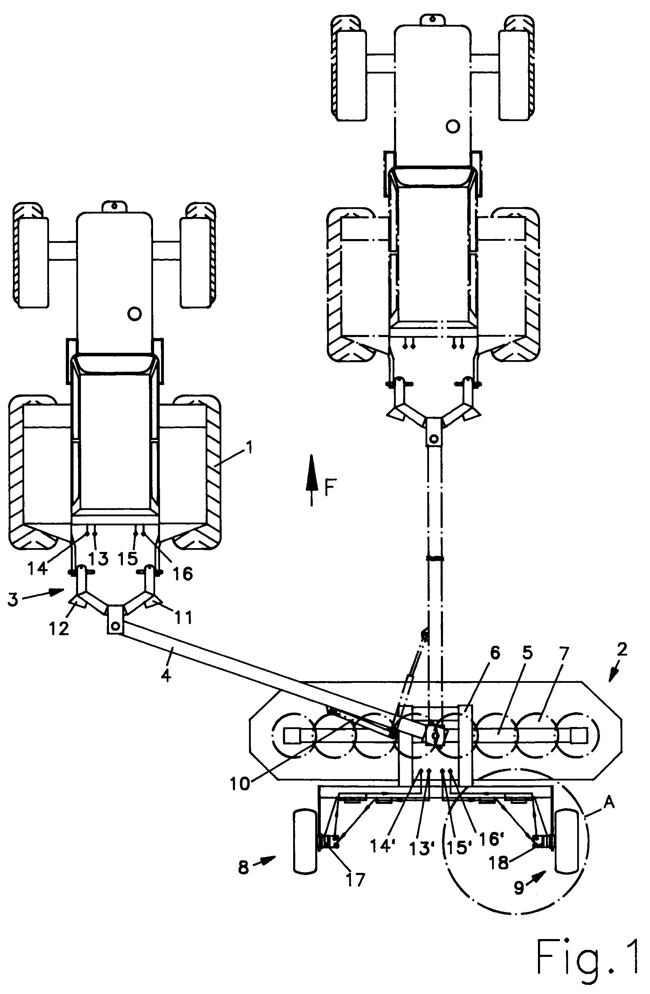

Als ein Ausführungsbeispiel ist in Fig. 1 ein Anhängemähwerk (2) dargestellt, das seitlich von einem Traktor (1) bei der Arbeit in Fahrtrichtung (F) gezogen wird. Das Anhängemähwerk (2) ist über ein Verbindungsgestänge (3) mit dem Traktor (1) gelenkig verbunden. Eine Deichsel (4) ist traktorseitig um eine vertikale Achse frei pendelnd mit dem Verbindungsgestänge (3) verbunden und geräteseitig mit einem Mähwerksrahmen (5), der die Mähwerkskreisel (7) trägt. Der Mähwerksrahmen (5) ist vorzugsweise pendelnd an einem Stützradträger (6) aufgehängt, der die Verbindung zu den Stützrädern (8,9) herstellt. Die geräteseitige Verbindung der Deichsel (4) zum Anhängemäher (2) wird über einen hydraulischen Stellzylinder (10) gesteuert, wodurch die Stellung des Anhängemähwerks (2) zum Traktor (1) einstellbar ist. Je nach Rechts- oder Linksauslage des Anhängemähwerks (2) zum Traktor (1) ist für die Rechtsauslage ein Anschlag (11) vorgesehen, der die freie Beweglichkeit des Anhängemähwerks zum Traktor bei Rechtsauslage begrenzt, während bei Linksauslage ein Anschlag (12) wirksam wird.

In Fig. 1 ist die Transportstellung des Anhängemähwerks (2) zum Traktor (1) zusätzlich dargestellt. In dieser Straßentransportstellung läuft bei Geradeausfahrt das Anhängemähwerk (2) symmetrisch zur Traktorlängsachse frei pendelnd nach. Diese Stellung wird durch Betätigung des Stellzylinders (10) erreicht.

In dem Ausführungsbeispiel nach Fig. 1 werden beide Stützräder (8,9) jeweils durch unabhängig arbeitende Hydromotoren (17,18) angetrieben. Der Hydromotor (17) treibt das Stützrad (8) an und ist über den Hydraulikanschluß (13,13';14,14') mit dem Traktor (1) verbunden. Der Hydromotor (18) des Stützrades (9) ist über den Hydraulikanschluß (15,15') als Zuleitung (25) und Hydraulikanschluß (16,16') als Rücklaufleitung (26) mit dem Traktor (1) verbunden. Die vorzugsweise gewählte Unabhängigkeit des Antriebs der beiden Hydromotoren (17,18) ist insbesondere bei Kurvenfahrten, bei denen die Stützräder (8,9) verschiedene Kreisbahnen fahren, sowie in unebenem Gelände von Vorteil. Insbesondere bei Rotationsmähwerken mit großer Arbeitsbreite ist es vorteilhaft, wenn beide Stützräder (8,9) angetrieben sind. Hierdurch wird unerwünschter Schlupf der Stützräder vermieden und die Auslegung der Hydromotoren (17,18) ist kostengünstiger.

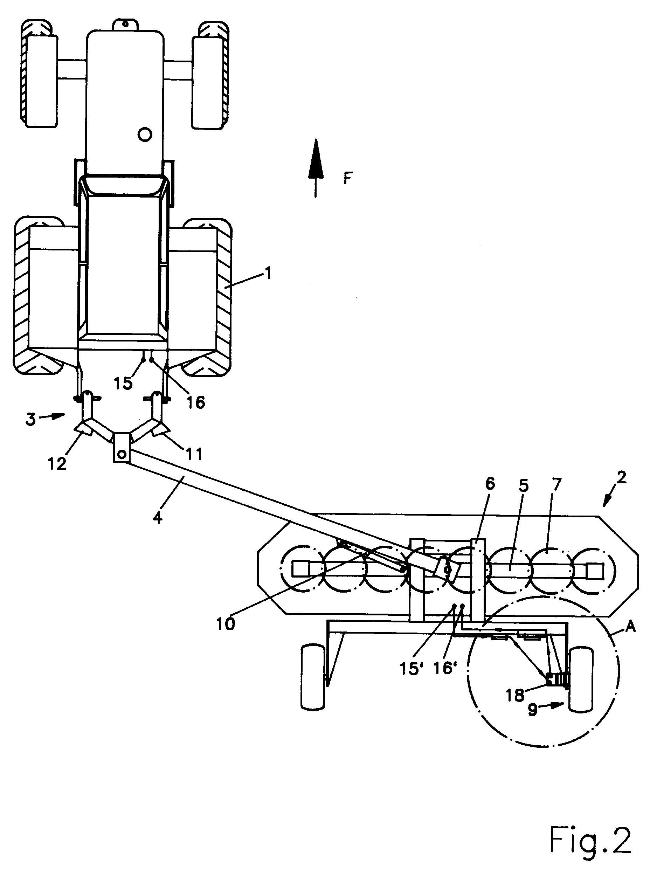

Das in Fig. 2 dargestellte weitere Ausführungsbeispiel unterscheidet sich zu dem in Fig. 1 lediglich dadurch, daß hier nur ein Stützrad (9) mit einem Hydromotor (18) ausgerüstet ist. Vorzugsweise wird das Antriebsrad mit der größten Entfernung zum Traktor (1) angetrieben während weitere Stützräder nicht angetrieben sind.

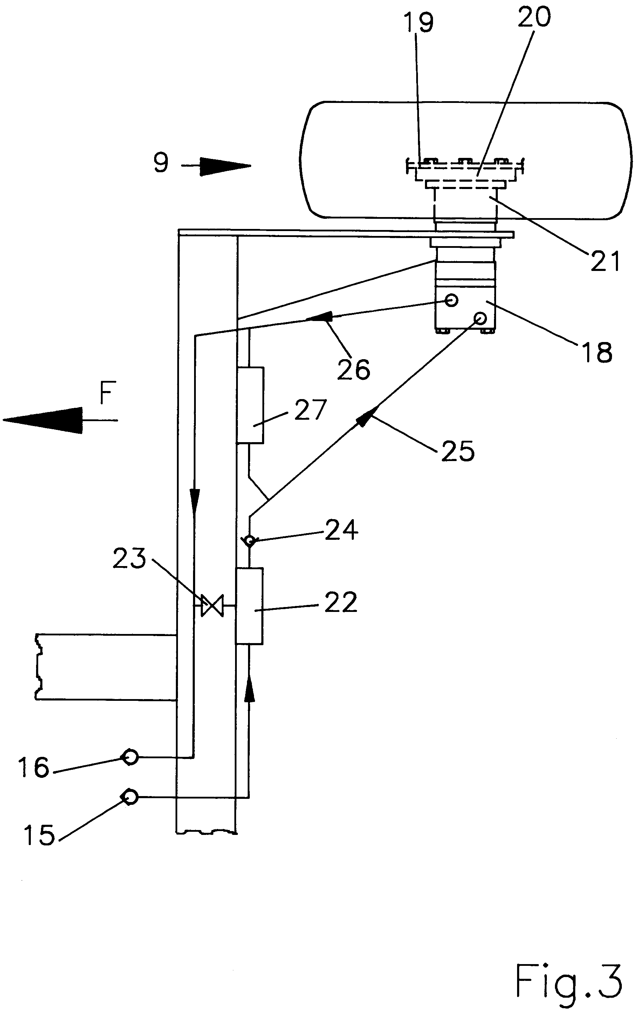

In Fig. 3 ist die Einzelheit (A) aus Fig. 1 oder Fig. 2 in vergrößertem Maßstab dargestellt. Das angetriebene Stützrad (9) besteht im wesentlichen aus dem Rad mit der Felge (19), dem Radflansch (20), dem Freilauf (21) und dem Hydromotor (18). Jedem Stützrad (8,9) ist ein Freilauf (21) zwischen Hydromotor (17,18) und Radflansch (20) zugeordnet, um bei abgeschaltetem Antrieb die Rückwärtsfahrt des Anhängemähwerks (2) zu ermöglichen.

Der hydraulische Antrieb des Hydromotors (18) erfolgt vom Traktor (1) aus. Die Regelung der Füllmenge steuert ein regelbares Stromregelventil (22). Die Einstellung richtet sich nach der erforderlichen Umfangsgeschwindigkeit des Stützrades (9), die wiederum von der Fahrgeschwindigkeit des Traktors (1) abhängig ist. Das Stromregelventil (22) wird so eingestellt, daß immer ein ausreichender Antrieb an den Stützrädern (8,9) wirksam ist. Ist der Traktor (1) mit einer hydraulischen Konstantpumpe ausgerüstet, wird das nicht benötigte Öl über ein geöffnetes Absperrventil (23) zurückgeführt. Ist der Traktor (1) mit einer hydraulischen Regelpumpe ausgerüstet, kann das Absperrventil (23) bei entsprechender Einstellung geschlossen bleiben.

Ein Rückschlagventil (24) ist dem Stromregelventil (22) nachgeordnet und übernimmt die Sicherungsfunktion für die Zuleitung (25). Der Hydromotor (18) ist vorzugsweise ein Hydromotor mit konstantem Verdrängungsvolumen in einer Stromrichtung. Der auf die maximale Arbeitsgeschwindigkeit ausgelegte Ölstrom wird bei Langsamfahrt über ein einstellbares Folgeventil (27) (Druckbegrenzungsventil) der Rücklaufleitung (26) zum Traktor (1) zugeführt.

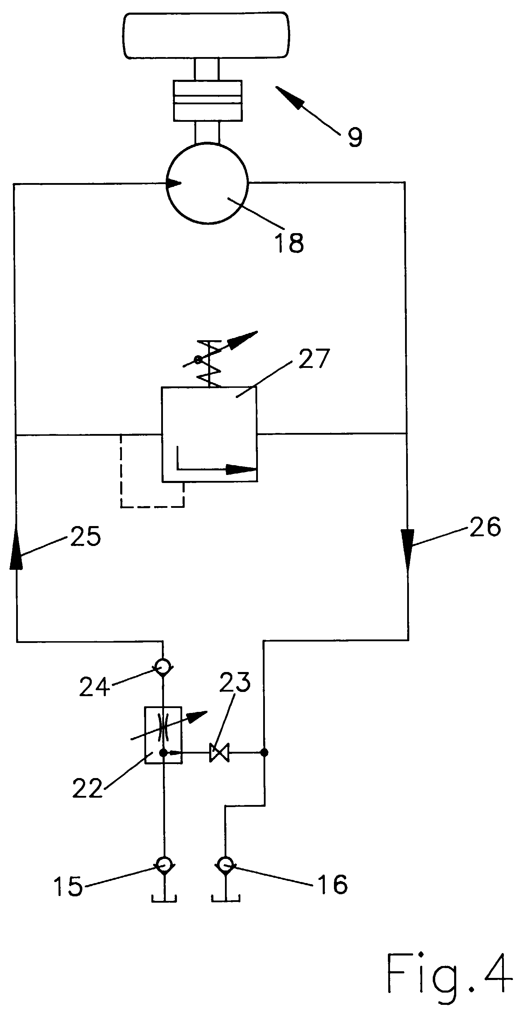

Fig. 4 zeigt den hydraulischen Schaltplan für das angetriebene Stützrad (9).

## Patentansprüche

1. Rotationsmähwerk, das durch ein Verbindungsgestänge oder eine Deichsel (4) zu einem Verbindungsgestänge (3) mit einem Traktor (3) verbindbar ist, der bei der Arbeit die Mähwerkzeuge rotierend antreibt, die mit einem Rahmen (5) verbunden sind, der sich über Stützräder auf dem Boden abstützt, dadurch gekennzeichnet, daß zumindest eines der Stützräder (8,9) des Mähwerks antreibbar ist.

2. Rotationsmähwerk nach Anspruch 1, dadurch gekennzeichnet, daß sämtliche Stützräder (8,9) des Mähwerks antreibbar sind.

3. Rotationsmähwerk nach einem der Ansprüche 1 und 2, dadurch gekennzeichnet, daß der Antrieb durch einen gesteuerten Hydromotor (17,18) pro Stützrad (8,9) erfolgt.

4. Rotationsmähwerk nach Anspruch 3, dadurch gekennzeichnet, daß der Hydromotor (17,18) vom Traktor (1) mit Drucköl versorgt wird.

5. Rotationsmähwerk nach einem der Ansprüche 1 bis 4, dadurch gekennzeichnet daß der Antrieb der Stützräder (8,9) fahrgeschwindigkeitsabhängig einstellbar ist.

6. Rotationsmähwerk nach einem der Ansprüche 3 bis 5, dadurch gekennzeichnet, daß jedem Hydromotor (17,18) ein regelbares Stromregelventil (22) vorgeschaltet ist.

7. Rotationsmähwerk nach Anspruch 6, dadurch gekennzeichnet, daß dem Stromregelventil (22) ein Rückschlagventil (24) nachgeordnet ist.

8. Rotationsmähwerk nach einem der Ansprüche 3 bis 7, dadurch gekennzeichnet, daß jedem Hydromotor (17,18) ein regelbares Folgeventil (27) parallelgeschaltet ist.

9. Rotationsmähwerk nach einem der Ansprüche 6 bis 8, dadurch gekennzeichnet, daß das regelbare Stromregelventil (22) vom Traktor (1)aus bedienbar ist.

10. Rotationsmähwerk nach einem der Ansprüche 6 bis 9, dadurch gekennzeichnet, daß die Stromregelventile (22) für jeden Hydromotor (17,18) voneinander unabhängig bedienbar sind.

11. Rotationsmähwerk nach einem der Ansprüche 1 bis 10, dadurch gekennzeichnet, daß zwischen jedem Antriebsmotor (17,18) und jedem angetriebenen Stützrad (8,9) ein Freilauf (21) angeordnet ist.

12. Rotationsmähwerk nach einem der Ansprüchen 1, 2, 5 oder 11, dadurch gekennzeichnet, daß der Antrieb durch einen gesteuerten Elektromotor pro Stützrad erfolgt.

13. Rotationsmähwerk nach einem der Ansprüche 1 bis 12, dadurch gekennzeichnet, daß der Antrieb des Stützrades (8) bzw. der Stützräder (8,9) durch einen Regelkreis erfolgt, der dem Mähwerk eine vorgegebene Lage und/oder Ausrichtung zum Traktor (1) vermittelt.
